(19) Europäisches Patentamt
European Patent Office
Office européen des brevets

(11) **EP 3 958 438 A1**

(12) **EUROPÄISCHE PATENTANMELDUNG**

(43) Veröffentlichungstag:
**23.02.2022   Patentblatt 2022/08**

(21) Anmeldenummer: **20192147.5**

(22) Anmeldetag: **21.08.2020**

(51) Internationale Patentklassifikation (IPC):
***H02K 1/14*** *(2006.01)*          ***H02K 29/03*** *(2006.01)*
***H02K 15/06*** *(2006.01)*

(52) Gemeinsame Patentklassifikation (CPC):
**H02K 29/03; H02K 1/146;** H02K 15/066

(84) Benannte Vertragsstaaten:
**AL AT BE BG CH CY CZ DE DK EE ES FI FR GB
GR HR HU IE IS IT LI LT LU LV MC MK MT NL NO
PL PT RO RS SE SI SK SM TR**
Benannte Erstreckungsstaaten:
**BA ME**
Benannte Validierungsstaaten:
**KH MA MD TN**

(71) Anmelder: **maxon international ag**
**6072 Sachseln (CH)**

(72) Erfinder: **Borngräber, Oliver**
**79674 Todtnau (DE)**

(74) Vertreter: **Grünecker Patent- und Rechtsanwälte
PartG mbB
Leopoldstraße 4
80802 München (DE)**

(54) **ELEKTROMOTOR MIT OPTIMIERTEM STATOR**

(57)    Die vorliegende Erfindung betrifft einen Elektromotor mit einem Außenrotor und einem innerhalb des Außenrotors angeordneten, bevorzugt elektronisch kommutierten, Stator, der im Umfang angeordnete Statorzähne aufweist. Es sind Statorzähne einer ersten Gruppe und Statorzähne einer zweiten Gruppe vorhanden, wobei die Statorzähne der zweiten Gruppe ein von den Statorzähnen der ersten Gruppe unterschiedliches Querschnittsprofil aufweisen. Die Kosten für einen solchen Elektromotor sollen reduziert werden. Hierzu weisen die Statorzähne der zweiten Gruppe eine größere Umfangsbereite an der Außenfläche des Stators als die Statorzähne der ersten Gruppe auf und die Statorzähne der zweiten Gruppe weisen eine Längsnut an der Außenfläche des Stators zum Ausbilden zusätzlicher Statorpole auf. Die Erfindung bezieht sich auch auf einen entsprechenden Stator sowie auf ein Verfahren zum Herstellen eines, bevorzugt elektronisch kommutierten, Elektromotors.

Fig. 1

EP 3 958 438 A1

**Beschreibung**

Die vorliegende Erfindung betrifft einen Elektromotor mit einem Außenrotor und einem innerhalb des Außenrotors angeordneten, bevorzugt elektronisch kommutierten, Stator, der am Umfang angeordnete Statorzähne aufweist, wobei eine erste Gruppe von Statorzähnen und eine zweite Gruppe von Statorzähnen vorhanden sind, und die Statorzähne der zweiten Gruppe ein von den Statorzähnen der ersten Gruppe unterschiedliches Querschnittsprofil aufweisen.

Aus der WO01/52386A2 ist ein solcher mit einem Außenrotor versehener Elektromotor bekannt. Der innenliegende Stator weist im Querschnitt rechteckförmige Statorzähne der ersten Gruppe und jeweils dazwischenliegende Statorzähne der zweiten Gruppe auf. Die Statorzähne der zweiten Gruppe sind in ihrem Fußbereich schmaler ausgebildet und ihr Kopfbereich weist nach außen divergierende Seitenflächen auf, um die um die Statorzähne der ersten Gruppe gewickelte Spulenwicklung in den zugehörigen Nuten zu sichern. In der dargestellten Ausführungsform sind neun Statorzähne der ersten Gruppe und neun Statorzähne der zweiten Gruppe und demnach entsprechend neun Statorspulen gleichmäßig am Umfang verteilt angeordnet. Insgesamt weist dieses spezielle Motorform zwei solcher Wicklungsanordnungen auf, die axial versetzt am Stator vorhanden sind. Mittels einer Spulenansteuerung erfolgt die elektronische Kommutierung der Spulen. Der Außenrotor ist mit Permanentmagneteinheiten versehen, die jeweils einen Rotorpol bilden. Am Umfang verteilt sind insgesamt sechs solcher Permanentmagneteinheiten bei dem entsprechenden Ausführungsbeispiel (Fig. 3) vorgesehen.

Die Rotorpolzahl hat direkten Einfluss auf die Dicke der Rückschlusshülse bzw. die Rotorjochdicke. Je höher die Rotorpolzahl ist, desto geringer ist der Fluss, der vom Permanentmagneten erzeugt werden muss. Da sich dieser Fluss in zwei gleiche Hälften zu beiden Seiten aufteilt und über die Rückschlusshülse bzw. das Rotorjoch schließt, kann - konstante Induktion in der Rückschlusshülse bzw. im Joch vorausgesetzt - die Rückschlusshülse bzw. das Joch bei steigender Rotorpolzahl dünner ausgeführt werden. Bei gegebenem Außendurchmesser wird deutlich, dass der Luftspalt in gleichem Maße zunehmen kann, indem die Dicke der Rückschlusshülse bzw. die Rotorjochdicke abnimmt. Durch den für eine elektrische Maschine gültigen quadratischen Zusammenhang von Luftspaltradius und Drehmoment ergibt sich somit ein größeres Drehmoment bei zunehmender Rotorpolzahl. Durch die hohe Rotorpolzahl erhöht sich aber auch die Anzahl der nötigen Statorzähne bzw. Statorspulen. Hierdurch erhöhen sich auch der Verschaltungsaufwand des Stators und somit maßgeblich die Kosten des Motors. Ein erster Schritt besteht darin, nicht jeden der Statorzähne mit einer Spulenwicklung zu versehen. Dennoch besteht auch hier Verbesserungsbedarf, insbesondere die Kosten weiter zu senken und ein gutes Drehmomentverhalten zu erzielen.

Es ist daher die Aufgabe der vorliegenden Erfindung, einen Elektromotor der eingangs genannten Art entsprechend zu verbessern.

Diese Aufgabe wird erfindungsgemäß dadurch gelöst, dass die Statorzähne der zweiten Gruppe eine größere Umfangsbreite an der Außenfläche des Stators als die Statorzähne der ersten Gruppe und eine Längsnut an der Außenfläche des Stators zum Ausbilden zusätzlicher Statorpole aufweisen.

Mit der erfindungsgemäßen Ausgestaltung ist es demnach möglich, weiterhin die Anzahl der nötigen Statorspulen gering zu halten und die Geometrie des Stators so zu verbessern, dass eine günstigere Drehmomentcharakteristik erzeugt ist. Dies gelingt durch die Ausbildung definierter zusätzlicher Statorpole, die mittels von der Längsnut scharf abgegrenzter Polflächen an den Statorzähnen der zweiten Gruppe bewirkt werden, so dass sich insgesamt ein gleichmäßiger Drehmomentverlauf ergibt. Bevorzugt kann die Umfangsbreite der Statorzähne der zweiten Gruppe mehr als doppelt so groß sein wie die Umfangsbreite der Statorzähne der ersten Gruppe.

Es hat sich bei einer Ausführungsform als günstig erwiesen, wenn nur die Statorzähne der ersten Gruppe jeweils mit einer Statorspule versehen sind. Entsprechend sind die Statorzähne der zweiten Gruppe bevorzugt nicht mit einer Statorspule bewickelt. Hierdurch ergibt sich eine Strombelagsverteilung wie bei Statoren mit jeweils einer Statorspule pro Statorzahn.

Es ist weiter von Vorteil, wenn die Anzahl der Statorzähne der ersten Gruppe und die Anzahl der Statorzähne der zweiten Gruppe gleich groß ist, wodurch eine möglichst große Symmetrie bereitgestellt werden kann.

Bevorzugt können gemäß einer Variante die Längsnuten jeweils eine Längsachse aufweisen, die parallel zur Mittelachse des Stators verläuft, wodurch am jeweils zugehörigen Statorzahn der zweiten Gruppe zwei Polflächen ausgebildet sind. Eine Spulenvorderseite bzw. eine Spulenrückseite ist dann jeweils zwischen der Polfläche eines Statorzahns der ersten Gruppe und einer benachbarten Polfläche des Statorzahns der zweiten Gruppe angeordnet, wobei die Polflächen eines Statorzahns der zweiten Gruppe jeweils benachbart zu einer jeweils anderen am Umfang des Stators nachfolgend angeordneten Statorspule angeordnet sind.

Zur Vermeidung von Rastmomentoberwellen ist es gemäß einer weiteren Variante bevorzugt, wenn die beiden Polflächen an dem Statorzahn der zweiten Gruppe im Wesentlichen gleich groß sind, oder bevorzugt maximal 10 % und weiter bevorzugt maximal 5 % in der Flächengröße voneinander abweichen.

Darüber hinaus ist es gemäß einer Variante weiter von Vorteil, wenn die Polflächen der Statorzähne der ersten Gruppe jeweils im Wesentlichen die gleiche Flächengröße wie eine Polfläche der Statorzähne der zweiten Gruppe aufweisen, oder bevorzugt maximal 10 % und weiter bevorzugt maximal 5 % in der Flächengröße voneinander abweichen.

Eine weitere Verbesserung ergibt sich gemäß einer Ausführungsform dann, wenn sämtliche Polflächen zueinander im Wesentlichen im gleichen Abstand zueinander angeordnet sind, oder bevorzugt die Abstände weniger als 10 % und weiter bevorzugt weniger als 5 % voneinander abweichen.

In einer bevorzugten Ausführungsform sind die Statorzähne der ersten Gruppe derart geformt, so dass eine auf einem Spulenkörper vorgefertigte Statorspule, wobei die Querschnittsform des Spulenkörpers im Wesentlichen der Querschnittsform eines Statorzahns der ersten Gruppe angepasst ist und/oder entspricht, auf die Statorzähne der ersten Gruppe aufschiebbar ist. Durch diese vorteilhafte Formgebung der Statorzähne der ersten Gruppe können die Statorspulen besonders einfach und kostengünstig auf einem Spulenkörper vorgefertigt und anschließend auf die Statorzähne aufgeschoben werden.

Damit insbesondere das Anordnen der Statorspulen vereinfacht und deren Ausgestaltung begünstigt wird, können die Statorzähne der ersten Gruppe im Querschnitt im Wesentlichen eine Rechteckform und/oder die Statorzähne der zweiten Gruppe im Wesentlichen eine zum Außenumfang des Stators hin divergierende Trapezform mit der Längsnut als Aussparung aufweisen. Die Rechteckform der Statorzähne der ersten Gruppe begünstigt ein einfaches Aufstecken der zugehörigen Statorspule. Gegebenenfalls kann der zugehörige Statorzahn der ersten Gruppe einen leicht ausgeprägten Zahnkopf zur Sicherung der Statorspule aufweisen. Dieser wird jedoch erst nach dem Aufschieben der Statorspule erzeugt. Eine entsprechende Ausgestaltung der Statorzähne der zweiten Gruppe mit der beschriebenen Trapezform begünstigt die Ausgestaltung der Statorspule ebenfalls. Insbesondere ist es möglich, dass sich die Statorspule hinsichtlich ihres Querschnitts an der Spulenvorderseite oder an der Spulenrückseite über ihre Höhe nicht verändern muss, z.B. zum Fuß hin nicht dünner werden muss (im Gegensatz zur Ausgestaltung gemäß Fig. 3 der WO 01/52386 A2).

Bevorzugt kann jedem Statorzahn der ersten Gruppe ein Wicklungsnutpaar zugeordnet sein, wobei die Wicklungsnuten eines Wicklungsnutpaars im Wesentlichen einen rechteckförmigen Querschnitt, von bevorzugt im Wesentlichen gleicher Querschnittsgröße, aufweisen. Insbesondere in Kombination mit einem im Querschnitt rechteckförmigen Statorzahn der ersten Gruppe ergeben sich so parallele Seitenflächen der Wicklungsnuten eines Wicklungsnutpaars, die dann optimal mit der entsprechenden Wicklung der zugehörigen Statorspule versehen werden können. Ein besonders hoher Füllgrad kann auf diese Weise erreicht werden und es können auch Drähte mit einem dickeren Querschnitt verwendet werden. Weiter kann hierdurch die Statorspule eine gleiche Breite über ihre gesamte Höhe aufweisen, was die Spulenwicklungstechnik und auch die Anordnung der Statorspule vereinfacht.

Des Weiteren kann mindestens eine Längsnut in den Statorzähnen der zweiten Gruppe Seitenflächen aufweisen, die im Wesentlichen parallel zu den Seitenflächen des zugehörigen Statorzahns der zweiten Gruppe verläuft. Hierdurch entstehen quasi am äußeren Endbereich des Statorzahns der zweiten Gruppe zwei Polarme mit jeweils der zugeordneten Polfläche an den Enden und die eine im Wesentlichen gleichmäßige Dicke aufweisen. Von besonderem Vorteil ist es, wenn die Längsnut genau in der Mitte verläuft, so dass beide Polarme identisch sind. Bei einer trapezförmigen Ausgestaltung der Statorzähne der zweiten Gruppe ergibt sich somit ebenfalls eine Trapez- bzw. eine Dreieckform der Längsnut im Querschnitt. Hierdurch kommt es im Bereich des Übergangs vom Zahnfuß zu den Polarmen des Statorzahns nicht zu einer sprunghaften Querschnittsverjüngung, wodurch sich Vorteile hinsichtlich der Eisensättigung ergeben können.

Gemäß einer Ausführungsvariante können die Statorzähne der ersten und/oder zweiten Gruppe Bestandteil eines Statorblechpaketes sein. Üblicherweise wird ein Statorgrundkörper aus einem Statorblechpaket aufgebaut. Die einzelnen Bleche bestehen aus einem magnetisch leitfähigem Material, bevorzugt einem Eisenwerkstoff, und sind gegeneinander isoliert. Jedes Statorblech besteht bevorzugt aus einem innenliegenden Rückschlussring, von dem radial die jeweiligen Statorzähne abstehen. Die Statorzähne sind am Umfang gleichmäßig verteilt angeordnet, wobei sich Statorzähne der ersten Gruppe mit Statorzähnen der zweiten Gruppe in Umfangsrichtung abwechseln. Günstigerweise sind nur die Statorzähne der ersten Gruppe mit einer Statorspule versehen.

Des Weiteren bezieht sich die Erfindung auf einen Stator für einen, bevorzugt elektrisch kommutierten, Elektromotor mit am Umfang angeordneten Statorzähnen, wobei eine erste Gruppe von Statorzähnen und eine zweite Gruppe von Statorzähnen vorhanden sind, und die Statorzähne der zweiten Gruppe ein von den Statorzähnen der ersten Gruppe unterschiedliches Querschnittsprofil aufweisen. Der Stator ist insbesondere dadurch gekennzeichnet, dass die Statorzähne der zweiten Gruppe eine größere Umfangsbreite an der Außenfläche des Stators als die Statorzähne der ersten Gruppe und eine Längsnut an der Außenfläche des Stators zum Ausbilden zusätzlicher Statorpole aufweisen. Ein solcher Stator kann insbesondere bei hochpoligen Maschinen eingesetzt werden. Gleichzeitig kann jedoch der Wickel- und Verschaltungsaufwand der Statorwicklung verringert werden.

Bevorzugt ist das erfindungsgemäße Statordesign verwendbar für alle Wicklungsnut-/Polpaarkombinationen, welche sich nach dem Gesetz

$$\frac{2p}{Q} = \frac{m \pm \gamma}{m}$$

bilden lassen, wobei p die Rotorpolpaarzahl, Q die Nut-Anzahl, m die Phasenzahl und γ = 1 oder 2 ist.

Um eine Redundanz des Wicklungssystems zu erreichen bzw. eine 2x3 Phasenwicklung zu ermöglichen, sollte die Spulenzahl in einer bevorzugten Ausführungsform ein Vielfaches von 6 sein. Dadurch kann beispielsweise bevorzugt mit 12 Statorspulen und 24 Statornuten (Wicklungsnuten) ein Außenläufermotor mit 32 Rotorpolen (Rotorpolpaarzahl 16) realisiert werden. Vorzugsweise sollte der Außenrotor mit mindestens 4 und besonders bevorzugt mit mindestens 8 Rotorpolpaaren p ausgeführt sein.

Darüber hinaus bezieht sich die Erfindung auf ein Verfahren zum Herstellen eines, bevorzugt elektrisch kommutierten, Elektromotors mit folgenden Schritten:

A) Bereitstellen eines Statorgrundkörpers mit einer ersten Gruppe von Statorzähnen und einer zweiten Gruppe von Statorzähnen, wobei die Statorzähne der zweiten Gruppe ein von den Statorzähnen der ersten Gruppe unterschiedliches Querschnittsprofil aufweisen und die Statorzähne der zweiten Gruppe eine größere Umfangsbreite an der Außenfläche des Stators als die Statorzähne der ersten Gruppe und eine Längsnut an der Außenfläche des Stators zum Ausbilden zusätzlicher Statorpole aufweisen,

B) Vorfertigen mindestens einer Spulenwicklung auf einem Spulenkörper, dessen Querschnittsform im Wesentlichen der Querschnittsform eines Statorzahns der ersten Gruppe angepasst sind und/oder entspricht, wobei die Statorspulen blockförmig mit im Wesentlichen parallelen Seitenaußenflächen und Seiteninnenflächen vorgefertigt werden,

C) Aufschieben der Statorspule auf den Statorzahn der ersten Gruppe, wobei auf die benachbarten Statorzähne der zweiten Gruppe keine Statorspule aufgeschoben wird.

Das Verfahren kombiniert die Möglichkeit einer einfachen Wickeltechnologie (Formspule), die insbesondere gekennzeichnet sein kann durch hohen Kupferfüllgrad und der Möglichkeit zur Verarbeitung dicker Drähte (z.B. für 12 Volt notwendig) und der oben bereits erwähnten Vorteile einer hochpoligen Maschine bei minimalem Wickel- und Verschaltungsaufwand der Statorwicklung. Die Herstellungskosten können durch ein solches Verfahren erheblich gesenkt werden, ohne dass nennenswerte Kompromisse hinsichtlich des erreichbaren Drehmoments im Vergleich zu herkömmlichen gleich großen Elektromotoren in Kauf genommen werden müssen. Prinzipiell könnte die Blockform der Statorspulen auch unabhängig von der Längsnut in den Statorzähnen der zweiten Gruppe, bei ansonsten entsprechender Ausgestaltung des Statorgrundkörpers, verwendet werden.

In einer bevorzugten Variante des Schritts A) sind die Statorzähne der ersten Gruppe mit im Wesentlichen parallelen Seitenflächen und die Statorzähne der zweiten Gruppe mit zur Außenfläche des Statorgrundkörpers hin divergierenden Seitenflächen über mehr als 50 % ihrer Gesamthöhe ausgebildet.

Gemäß einer weiteren Verfahrensvariante wird ein zusätzlicher Schritt D), nämlich das Bereitstellen eines Außenrotors mit Permanentmagneten ausgeführt, wobei die Polpaarzahl des Außenrotors größer ist als die Anzahl der Statorzähne der ersten Gruppe, und wobei im Schritt A) jeder Statorzahn der zweiten Gruppe mittels der Längsnut mit zwei Polflächen versehen ist. Bei gleichmäßigem Aufbau lässt sich hierdurch die Anzahl der Polflächen um ein Drittel erhöhen. In Kombination mit der hohen Rotorpolzahl und einem dadurch erzeugbaren größeren Luftspaltdurchmesser, lässt sich trotz Reduktion der nötigen Statorspulen und der Geometrie des Statorpakets im Vergleich zu herkömmlichen gleich großen Elektromotoren, ein vergleichbares hohes Drehmoment erzeugen.

Im Folgenden werden Ausführungsformen der vorliegenden Erfindung anhand von Zeichnungen näher erläutert. Es zeigen:

Fig. 1 eine schematische Darstellung eines erfindungsgemäßen Elektromotors im Querschnitt und

Fig. 2 eine zweite Ausführungsform eines Stators in einer Seitenansicht, der den Stator aus Fig. 1 ersetzen kann.

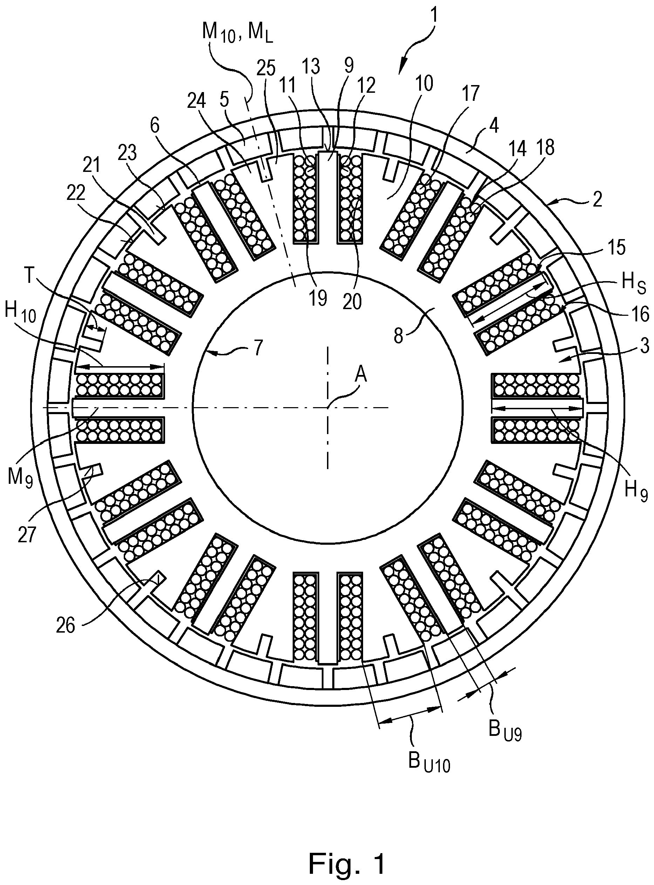

In Fig. 1 ist der schematische Querschnitt eines elektronisch kommutierten Elektromotors 1, nämlich eines Außenläufermotors dargestellt. Der Elektromotor 1 weist einen um die zentrale Achse A drehbar angeordneten Außenrotor 2 und einen im Inneren des Außenrotors 2 angeordneten, stillstehenden Stator 3 auf.

Der Außenrotor 2 weist eine Rückschlusshülse 4 aus einem Eisenwerkstoff und auf der Innenseite der Rückschlusshülse 4 im Abstand zueinander angeordnete Permanentmagnete 5 auf. Die Permanentmagnete 5 sind fest mit der Rückschlusshülse 4 verbunden. Im vorliegenden Fall sind gleichmäßig verteilt 32 Permanentmagnete 5 in jeweils einem Winkelschritt von 11,25° zueinander verteilt an der Innenseite der Rückschlusshülse 4 vorhanden. Es handelt sich demnach um einen Außenrotor 2 mit hoher Rotorpolzahl (Rotorpolzahl 32, d.h. Rotorpolpaarzahl 16). Prinzipiell können die unterschiedlichsten Bauformen von derartigen Außenrotoren 2 zur Anwendung kommen. Die Permanentmagnete 5 können z.B. mehrteilig ausgestaltet sein. Es besteht auch die Möglichkeit, die Permanentmagnete 5 in Ausnehmungen der Rückschlusshülse 4 anzuordnen, um ein weiter in der Dicke D reduziertes Außenrotordesign zu erlangen. Die hohe Rotorpolzahl hat direkten Einfluss auf die Dicke der Rückschlusshülse (Rotorjochdicke). Denn je höher die Rotorpolpaarzahl ist, desto geringer ist der magnetische Fluss, der vom Permanentmagneten 5 erzeugt werden muss. Da sich dieser magnetische Fluss in zwei gleichen Hälften zu beiden Seiten aufteilt und über die Rückschlusshülse 4 schließt, kann - konstante Induktion in der Rückschlusshülse 4 vorausgesetzt - die Rückschlusshülse 4 bei steigender Rotorpolpaarzahl dünner ausgeführt werden. Bei gegebenem Außendurchmesser des Außenrotors 2 wird deutlich, dass der zwischen dem Außenrotor 2 und dem Stator 3 gebildete Luftspalt 6 im gleichen Maße zunehmen kann, indem die Dicke der Rückschlusshülse 4 abnimmt. Durch den für den Elektromotor 1 gültigen quadratischen Zusammenhang von Luftspaltradius und Drehmoment, ergibt sich somit ein größeres Drehmoment bei zunehmender Rotorpolpaarzahl. In entsprechendem Maße und zur Beibehaltung eines gleich breiten Luftspalts 6 kann der Außendurchmesser des Stators 3 anwachsen.

Der Stator 3 weist einen Statorgrundkörper 7 auf, der aus einem Statorblechpaket besteht. Die einzelnen Statorbleche sind im vorliegenden Fall aus einem Eisenwerkstoff hergestellt und gegeneinander isoliert.

Der Stator 3 weist an seinem Innenumfangsbereich eine Statorhülse 8 auf. Von dieser Statorhülse 8 erstrecken sich in radialer Richtung und in gleichmäßiger Verteilung zwei verschiedene Formen von Statorzähnen 9 und Statorzähnen 10. Die Statorzähne 9 gehören zu einer ersten Gruppe von Statorzähnen und die Statorzähne 10 gehören zu einer zweiten Gruppe von Statorzähnen. Im vorliegenden Fall sind 12 Statorzähne 9 der ersten Gruppe gleichmäßig am Umfang der Statorhülse 8, d.h. in Winkelschritten von 30°, versetzt zueinander angeordnet. Ebenso sind Statorzähne 10 der zweiten Gruppe in gleich hoher Anzahl, nämlich 12, vorhanden, die ebenfalls in Winkelschritten von 30° am Umfang der Statorhülse 8 versetzt zueinander angeordnet sind.

Die Statorzähne 9 der ersten Gruppe erstrecken sich über die gesamte axiale Länge des Statorgrundkörpers 7 und weisen im Querschnitt eine Rechteckform mit parallelen Seitenflächen 11 und 12 auf. An der im Luftspalt 6 zugewandten Seite formen die Statorzähne 9 der ersten Gruppe jeweils eine Polfläche 13. Die Polfläche 13 kann eine an den Außendurchmesser des Stators 3 angepasste Krümmung aufweisen. Entsprechend weisen für einen gleichmäßigen Luftspalt 6 auch die Permanentmagnete 5 eine konkave Krümmung an ihrer dem Luftspalt 6 zugewandten Seite auf. Diese Krümmung ist an den Innendurchmesser des Außenrotors 2 im Bereich des Luftspalts 6 angepasst. Die Statorzähne 9 der ersten Gruppe weisen an der Außenfläche des Stators 3 eine Umfangsbreite $B_{U9}$ auf.

Auf jedem Statorzahn 9 der ersten Gruppe ist eine Statorspule 14 aufgeschoben. Die Statorspule 14 umgibt den zugehörigen Statorzahn 9 der ersten Gruppe an allen Seitenflächen. Die Höhe $H_S$ einer Statorspule 14 ist etwas geringer als die Höhe Hg der Statorzähne 9 der ersten Gruppe. Die Statorspule 14 weist bei der vorliegenden Ausführungsform eine zweilagige Wicklung aus einem Kupferrunddraht auf. Jede dieser Wicklungslagen weist acht Windungen auf. Es sind selbstverständlich andere alternative Ausführungsformen für die Bewicklung der Statorspulen möglich. Zum Anordnen der Statorspule 14 sind auf beiden Seiten neben den Statorzähnen 9 der ersten Gruppe Wicklungsnuten 15 und 16 eines Wicklungsnutpaars angeordnet. In der Wicklungsnut 15 befindet sich die Spulenvorderseite 17 und in der Wicklungsnut 16 die Spulenrückseite 18. Die Wicklungsnuten 15 und 16 sind identisch ausgeführt und weisen einen rechteckförmigen Querschnitt auf. Demnach weisen sie über ihre gesamte Höhe, die der Höhe Hg entspricht, eine gleichmäßige Breite auf, die der Umfangsbreite $B_{U9}$ entspricht. Diese Breite ist so gewählt, dass die beiden Wicklungslagen der Spulenvorderseite 17 und die Wicklungslagen der Spulenrückseite 18 die zugehörigen Wicklungsnuten 15,16 möglichst kompakt ausfüllen. Die Seitenflächen 11 und 12 eines Statorzahns 9 der ersten Gruppe bildet gleichzeitig die eine Seitenfläche der zugehörigen Wicklungsnut 15 bzw. 16. Die jeweils zweite Seitenfläche 19 der Wicklungsnut 15 und zweite Seitenfläche 20 der Wicklungsnut 16 verläuft entsprechend parallel zur ersten Seitenfläche 11 und 12. Hieraus ergibt sich, dass sämtliche Seitenflächen 11 und 12 sowie 19 und 20, obwohl die Mittellinie $M_9$ des Statorzahns 9 der ersten Gruppe radial verläuft, nicht radial auf die Achse A zulaufen. Dieses wird ausgeglichen durch die Form der Statorzähne 10 der zweiten Gruppe.

Die Statorzähne 10 der zweiten Gruppe erstrecken sich über die gesamte axiale Länge des Statorgrundkörpers 7. Die Seitenflächen 19 und 20 der Wicklungsnuten 15 und 16 sind identisch mit den Seitenflächen der Statorzähne 10 der zweiten Gruppe. Hierdurch ergibt sich eine in etwa trapezförmige Querschnittsform, weil die beiden Seitenflächen 19 und 20 eines Statorzahns 10 der zweiten Gruppe in Richtung des Luftspalts 6 hin divergieren. Die beiden Seitenflächen 19 und 20 eines Statorzahns 10 der zweiten Gruppe verlaufen in einem Winkel von 30° zueinander. An dem dem Luftspalt 6 zugewandten Kopfbereich der Statorzähne 10 der zweiten Gruppe ist eine Längsnut 21 eingeformt. Die Längsnut 21 verläuft symmetrisch zur Mittellinie $M_{10}$ des Statorzahns 10 der zweiten Gruppe, d.h. die Mittellinie $M_L$ der Längsnut 21 und die Mittellinie $M_{10}$ sind identisch. Die Längsnut 21 ist zum Luftspalt 6 hin geöffnet. Nachdem es aber auf die magnetischen Flusseigenschaften ankommt, kann die Längsnut 21 auch mit einem magnetisch nichtleitenden Werkstoff ausgefüllt sein. Aufgrund der Längsnut 21 werden an der dem Luftspalt 6 zugewandten Seite der Statorzähne 10 der zweiten Gruppe zwei gleich große Polflächen 22 und 23 gebildet. Die Statorzähne der zweiten Gruppe weisen an der Außenfläche des Stators 3 eine Umfangsbreite $B_{U10}$ auf, die größer ist als $B_{U9}$, im vorliegenden Fall mehr als doppelt so groß.

Die Längsnut 21 ist im Querschnitt rechteckförmig und weist eine Tiefe T auf, die im Wesentlichen dem 0,25-fachen der Höhe $H_{10}$ des Statorzahns 10 der zweiten Gruppe entspricht. Bevorzugt soll die Tiefe T im Bereich von dem 0,2-fachen bis 0,4-fachen der Höhe $H_{10}$ liegen. Aufgrund der Längsnut 21 sind am dem Luftspalt 6 zugewandten Endbereich der Statorzähne 10 der zweiten Gruppe jeweils die die zugehörigen Polflächen 22 und 23 aufweisenden Polarme 24 und 25 ausgebildet. Im vorliegenden Fall verjüngt sich die Breite der Polarme 24 und 25 ausgehend von den Polflächen 22 und 23 in Richtung Zahnfuß des Statorzahns 10 der zweiten Gruppe.

Aufgrund dieser Ausgestaltung des Stators 3 verdoppelt sich die Anzahl definiert ausgebildeter Statorpole des Stators 3. Das heißt, beim vorliegenden Ausführungsbeispiel weist der Stator 24 definierte Statorpole auf, obwohl nur 12 Statorspulen 14 im Einsatz sind.

Die hohe Rotorpolpaarzahl erfordert normalerweise auch eine entsprechende hohe Anzahl von Statorspulen. Mit der vorliegenden Technik wird diese Anzahl der Statorspulen 14 jedoch um die Hälfte reduziert, wodurch sich auch der Verschaltungsaufwand des Stators 3 verringert und somit auch maßgeblich die Kosten des Elektromotors 1. Es stellt somit einen großen Vorteil dar, dass mittels der beschriebenen Maßnahmen die Anzahl der nötigen Statorspulen 14 reduziert werden konnte. Darüber hinaus vereinfacht sich auch die Geometrie der Statorspulen 14 aufgrund der gewählten Geometrie der Statorzähne 9 der ersten Gruppe und Statorzähne 10 der zweiten Gruppe.

Das erfindungsgemäße Statordesign eröffnet die Möglichkeit einer einfachen Wickeltechnologie (Formspule) mit hohem Kupferfüllgrad und der Möglichkeit zur Verarbeitung dicker Drähte (für 12 Volt notwendig).

Bei der Herstellung des Stators 3 wird zunächst ein entsprechend der obigen Beschreibung ausgeformter Statorgrundkörper 7 erzeugt. Unabhängig davon werden die Statorspulen 14 auf einen nicht näher gezeigten Spulenkörper mittels eines Wickelverfahrens hergestellt. Der Spulenkörper weist eine Kontur auf, die im Wesentlichen der Kontur des Statorzahns 9 der ersten Gruppe entspricht. Bei dem Spulenkörper kann es sich auch um eine Wickelhülse handeln, die zusammen mit der Statorspule 14 auf den Statorzahn 9 der ersten Gruppe aufgeschoben wird. Die Statorspule 14 wird demnach nicht am Statorgrundkörper 7 gewickelt, sondern separat davon und als modulares Bauteil auf diesen in einfacher Weise aufgesetzt. Geeignete Mittel können dann die Statorspulen 14 in den Wicklungsnuten 15 und 16 festhalten. Es besteht z. B. die Möglichkeit, diese zu verkleben. Ein Ausfüllen der mit der Statorspule 14 versehenen Wicklungsnut 15 oder 16 mittels eines geeigneten fließfähigen Kunststoffmaterials ist ebenfalls möglich. Es besteht aber aufgrund der Kompaktheit der Statorspulen 14 und der entsprechend guten Füllung der Wicklungsnuten 15 und 16 auch die Möglichkeit, die Statorzähne 9 und/oder die Statorzähne 10 im Bereich der zugehörigen Polflächen 13, 22 und 23 leicht zu verformen, um ein Herausgleiten der Statorspulen 14 zu verhindern.

Die Vorteile des Herstellungsverfahrens und der Ausgestaltung liegen auf der Hand. Obwohl ein gleichartig leistungsstarker Elektromotor 1 (im Vergleich zu einem herkömmlichen Elektromotor mit gleichen Außenrotordurchmesser) hergestellt werden kann, reduzieren sich die Herstellungskosten sehr stark, weil nur die Hälfte der üblicherweise von der Polzahl des Außenrotors 2 geforderten Anzahl der Statorspulen 14 eingesetzt wird. Gleichzeitig wurde auch die Ausgestaltung der Statorspulen 14 selbst sehr stark vereinfacht, wodurch zusätzlich die Kosten gesenkt werden konnten. Die Spulenvorderseite 17 und die Spulenrückseite 18 sind jeweils in etwa blockförmig mit im Wesentlichen gleichmäßiger Dicke ausgeführt, wodurch auch die gesamte Statorspule 14 in einer Seitenansicht (Blickwinkel wie Fig. 1) eine Rechteck-Blockform erhält.

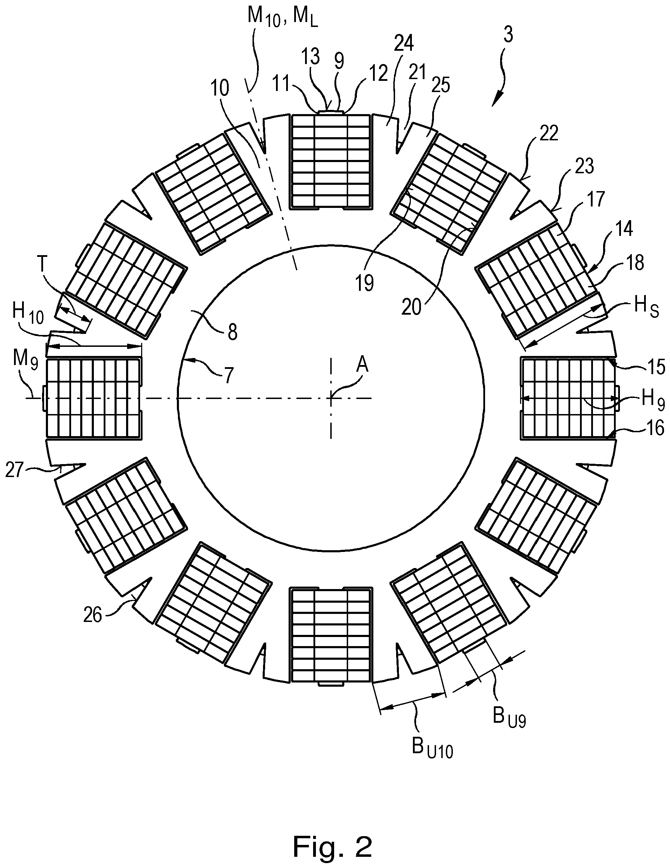

Im Folgenden wird anhand der Fig. 2 ein weiteres Ausführungsbeispiel der vorliegenden Erfindung näher erläutert. Es soll nur auf die wesentlichen Unterschiede zum vorangegangenen Ausführungsbeispiel eingegangen werden, weshalb unter Zuhilfenahme der gleichen Bezugsziffern hinsichtlich bau- und funktionsgleicher Elemente ergänzend auf die obige Beschreibung Bezug genommen wird. Es wird in der Folge davon ausgegangen, dass der in Fig. 2 dargestellte Stator 3 den gleichen Außendurchmesser hat, wie der in Fig. 1 dargestellte Stator 3, weshalb dieser exakt in der dargestellten Form zusammen mit dem in Fig. 1 dargestellten Außenrotor 2 betrieben werden kann.

Die Ausgestaltung der Statorzähne 9 der ersten Gruppe ist identisch. Allerdings sind die Statorzähne 10 der zweiten Gruppe etwas modifiziert. Insbesondere weist die Längsnut 21 im Querschnitt eine Dreiecksform auf, sodass die Polarme 24 und 25 über ihre gesamte Höhe eine gleichmäßige Breite haben. Hierdurch wird verhindert, dass es zu einer Engstelle für den magnetischen Rückfluss kommt, an dem die Eisensättigung schneller erreicht wird. Die Seitenflächen 26, 27 der Längsnut 21 sind demnach parallel zu den entsprechenden Seitenflächen 19 und 20 des zugehörigen Statorzahns 10 der zweiten Gruppe ausgerichtet. Des Weiteren wurde versucht, dass die Polflächen 13 sowie 22 und 23 die gleiche Flächengröße aufweisen. Auch eine Annäherung der Abstände der Polflächen 22 und 23 sowie zur Polfläche 13 wurde zumindest angestrebt. Die Breite des Statorzahns 10 der zweiten Gruppe im Fußbereich, d.h., zur Statorhülse 8 hin, ist etwas größer als im vorangegangenen Ausführungsbeispiel.

Des Weiteren sind die Statorspulen 14 anders ausgestaltet. Es wurde bei dieser Ausführungsform ein Kupferdraht mit einem rechteckförmigen Querschnitt verwendet. Die Breite des Kupferdrahtes ist hier etwas geringer als die Breite der Wicklungsnuten 15 und 16. Insgesamt weist jede Statorspule 14 acht Wicklungen auf. Aufgrund der Form des Wicklungsdrahtes ergibt sich eine noch bessere Füllung der Wicklungsnuten 15 und 16, die insbesondere in der Hochrichtung der Wicklungsnuten 15 und 16 besonders kompakt ist. Es sind selbstverständlich andere alternative Ausführungsformen für die Bewicklung der Statorspulen möglich. Die Statorspulen 14 werden wieder, wie bereits oben beschrieben wurde, mittels Spulenkörper vorgeformt und auf die Statorzähne 9 der ersten Gruppe aufgeschoben. Durch die Größe der Polflächen 13, 22 und 23, sowie ihr Größenverhältnis zueinander können Rastmomentoberwellen eingestellt werden. Ein gleichmäßiger Abstand der Polflächen 13, 22 und 23 ist angestrebt, aufgrund der Geometrie des Statorgrundkörpers 7 ist jedoch dieser nicht immer möglich.

Bezugszeichenliste

| | |
|---|---|
| 1 | Elektromotor |
| 2 | Außenrotor |
| 3 | Stator |
| 4 | Rückschlusshülse |
| 5 | Permanentmagnete |
| 6 | Luftspalt |
| 7 | Statorgrundkörper |
| 8 | Statorhülse |
| 9 | Statorzähne |
| 10 | Statorzähne |
| 11 | Seitenfläche |
| 12 | Seitenfläche |
| 13 | Polfläche |
| 14 | Statorspule |
| 15 | Wicklungsnut |
| 16 | Wicklungsnut |
| 16 | Rotorpolpaarzahl |
| 17 | Spulenvorderseite |
| 18 | Spulenrückseite |
| 19 | Seitenfläche |
| 20 | zweite Seitenfläche |
| 21 | Längsnut |
| 22 | Polfläche |
| 23 | Polfläche |
| 24 | Polarm |
| 25 | Polarm |
| 26 | Seitenfläche |
| 27 | Seitenfläche |

| | |
|---|---|
| $A$ | Mittelachse |
| $B_{U9}$ | Umfangsbreite Statorzahn 9 |
| $B_{U10}$ | Umfangsbreite Statorzahn 10 |
| $D$ | Dicke Rückschlusshülse |
| $H_S$ | Höhe Statorspule |
| $Hg$ | Höhe der Statorzähne 9 |
| $H_{10}$ | Höhe der Statorzähne 10 |
| $M_9$ | Mittellinie des Statorzahns 9 |
| $M_{10}$ | Mittellinie des Statorzahns 10 |
| $M_L$ | Mittellinie Längsnut |
| $T$ | Tiefe |

**Patentansprüche**

1. Elektromotor (1) mit einem Außenrotor (2) und einem innerhalb des Außenrotors (2) angeordneten, bevorzugt elektronisch kommutierten, Stator (3), der am Umfang angeordnete Statorzähne (9,10) aufweist, wobei eine erste Gruppe von Statorzähnen (9) und eine zweite Gruppe von Statorzähnen (10) vorhanden sind, und die Statorzähne (10) der zweiten Gruppe ein von den Statorzähnen (9) der ersten Gruppe unterschiedliches Querschnittsprofil aufweisen, **dadurch gekennzeichnet, dass** die Statorzähne (10) der zweiten Gruppe eine größere Umfangsbreite ($B_{U10}$ vs. $B_{U9}$) an der Außenfläche des Stators (3) als die Statorzähne (9) der ersten Gruppe und eine Längsnut (21) an der Außenfläche des Stators (3) zum Ausbilden zusätzlicher Statorpole aufweisen.

2. Elektromotor (1) nach Anspruch 1, **dadurch gekennzeichnet, dass** nur die Statorzähne (9) der ersten Gruppe jeweils mit einer Statorspule (14) versehen sind.

3. Elektromotor (1) nach Anspruch 1 oder 2, **dadurch gekennzeichnet, dass** die Anzahl der Statorzähne (9) der ersten Gruppe und die Anzahl der Statorzähne (10) der zweiten Gruppe gleich groß ist.

4. Elektromotor (1) nach einem der Ansprüche 1 bis 3, **dadurch gekennzeichnet, dass** die Längsnuten (21) jeweils eine Längsachse ($M_L$) aufweisen, die parallel zur Mittelachse (A) des Stators (3) verläuft, wodurch am zugehörigen Statorzahn (10) der zweiten Gruppe zwei Polflächen (22,23) ausgebildet sind.

5. Elektromotor (1) nach Anspruch 4, **dadurch gekennzeichnet, dass** die beiden Polflächen (22,23) an dem Statorzahn (10) der zweiten Gruppe im Wesentlichen gleich groß sind, d.h. bevorzugt maximal 10 % und weiter bevorzugt maximal 5 % in der Flächengröße voneinander abweichen.

6. Elektromotor (1) nach Anspruch 5, **dadurch gekennzeichnet, dass** die Polflächen (22,23) der Statorzähne (10) der zweiten Gruppe jeweils im Wesentlichen die gleiche Flächengröße wie eine Polfläche (13) der Statorzähne (9) der ersten Gruppe aufweisen, oder bevorzugt maximal 10 % und weiter bevorzugt maximal 5% in der Flächengröße voneinander abweichen.

7. Elektromotor (1) nach einem der Ansprüche 1 bis 6, **dadurch gekennzeichnet, dass** sämtliche Polflächen (13,22,23) im Wesentlichen den gleichen Abstand zueinander aufweisen, oder bevorzugt die Abstände weniger als 10 % und weiter bevorzugt weniger als 5 % voneinander abweichen.

8. Elektromotor (1) nach einem der Ansprüche 1 bis 7, **dadurch gekennzeichnet, dass** die Statorzähne (9) der ersten Gruppe derart geformt sind, so dass eine auf einem Spulenkörper vorgefertigte Statorspule, wobei die Querschnittsform des Spulenkörpers im Wesentlichen der Querschnittsform eines Statorzahns (9) der ersten Gruppe angepasst ist und/oder entspricht, auf die Statorzähne (9) der ersten Gruppe aufschiebbar ist.

9. Elektromotor (1) nach einem der Ansprüche 1 bis 8, **dadurch gekennzeichnet, dass** die Statorzähne (9) der ersten Gruppe im Querschnitt im Wesentlichen eine Rechteckform und/oder die Statorzähne (10) der zweiten Gruppe im Querschnitt im Wesentlichen eine zum Außenumfang des Stators (3) hin divergierende Trapezform mit der Längsnut (21) als Aussparung aufweisen.

10. Elektromotor (1) nach einem der Ansprüche 1 bis 9, **dadurch gekennzeichnet, dass** jedem Statorzahn (9) der ersten Gruppe ein Wicklungsnutpaar zugeordnet ist und die Wicklungsnuten (15,16) eines Wicklungsnutpaars im Wesentlichen einen rechteckförmigen Querschnitt von bevorzugt im Wesentlichen gleicher Querschnittsgröße aufweisen.

11. Elektromotor (1) nach einem der Ansprüche 1 bis 10, **dadurch gekennzeichnet, dass** mindestens eine Längsnut (21) in den Statorzähnen (10) der zweiten Gruppe Seitenflächen (26,27) aufweist, die im Wesentlichen parallel zu den Seitenflächen (19,20) des zugehörigen Statorzahns (10) der zweiten Gruppe verlaufen.

12. Elektromotor (1) nach einem der Ansprüche 1 bis 11, **dadurch gekennzeichnet, dass** die Statorzähne (9,10) der ersten und/oder der zweiten Gruppe Bestandteil eines Statorblechpaketes sind.

13. Stator (3) für einen, bevorzugt elektrisch kommutierten, Elektromotor (1) mit am Umfang angeordneten Statorzähnen (9,10), wobei eine erste Gruppe von Statorzähnen (9) und eine zweite Gruppe von Statorzähnen (10) vorhanden sind, und wobei die Statorzähne (10) der zweiten Gruppe ein von den Statorzähnen (9) der ersten Gruppe unterschiedliches Querschnittsprofil aufweisen, **dadurch gekennzeichnet, dass** die Statorzähne (10) der zweiten Gruppe eine größere Umfangsbreite ($B_{U10}$ vs. $B_{U9}$) an der Außenfläche des Stators (3) als die Statorzähne (9) der ersten Gruppe und eine Längsnut (21) an der Außenfläche des Stators (3) zum Ausbilden zusätzlicher Statorpole aufweisen.

14. Verfahren zum Herstellen eines, bevorzugt elektrisch kommutierten, Elektromotors (1) mit folgenden Schritten:

    A) Bereitstellen eines Statorgrundkörpers (7) mit einer ersten Gruppe von Statorzähnen (9) und einer zweiten Gruppe von Statorzähnen (10), wobei die Statorzähne (10) der zweiten Gruppe ein von den Statorzähnen (9) der ersten Gruppe unterschiedliches Querschnittsprofil aufweisen, wobei die Statorzähne (10) der zweiten Gruppe eine größere Umfangsbreite ($B_{U10}$ vs. $B_{U9}$) an der Außenfläche des Stators (3) als die Statorzähne (9) der ersten Gruppe und eine Längsnut (21) an der Außenfläche des Stators (3) zum Ausbilden zusätzlicher Statorpole aufweisen,

    B) Vorfertigen mindestens einer Statorspule (14) auf einem Spulenkörper, dessen Querschnittsform im Wesentlichen der Querschnittsform eines Statorzahns (9) der ersten Gruppe angepasst ist und/oder entspricht, und wobei die Statorspulen (14) blockförmig mit im Wesentlichen parallelen Seitenaußenflächen und Seiteninnenflächen vorgefertigt werden,

    C) Aufschieben der Statorspule (14) auf den Statorzahn (9) der ersten Gruppe, wobei auf die benachbarten Statorzähne (10) der zweiten Gruppe keine Statorspule (14) aufgeschoben wird.

15. Verfahren nach Anspruch 14, wobei im Schritt A) die Statorzähne (9) der ersten Gruppe mit im Wesentlichen parallelen Seitenflächen (11,12) und die Statorzähne (10) der zweiten Gruppe mit zur Außenfläche des Statorgrundkörpers (7) hin divergierenden Seitenflächen (19,20) über mehr als 50 % ihrer Gesamthöhe ($H_{10}$) ausgebildet sind.

16. Verfahren nach Anspruch 15, **gekennzeichnet durch** Schritt

    D) Bereitstellen eines Außenrotors (2) mit Permanentmagneten (5), wobei die Polpaarzahl des Außenrotors (2) größer ist als die Anzahl der Statorzähne (9) der ersten Gruppe, und wobei im Schritt A) jeder Statorzahn (10) der zweiten Gruppe mittels der Längsnut (21) mit zwei Polflächen (22,23) versehen ist.

Fig. 1

Fig. 2

**Europäisches Patentamt**
**European Patent Office**
**Office européen des brevets**

# EUROPÄISCHER RECHERCHENBERICHT

**Nummer der Anmeldung**

EP 20 19 2147

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| Y | US 2019/052131 A1 (WAKITA TADAYUKI [JP]) 14. Februar 2019 (2019-02-14) * Absätze [0042], [0046]; Abbildung 2 * ----- | 1-7, 10-16 | INV. H02K1/14 H02K29/03 |
| Y | CN 209 608 525 U (WUXI KEMAI ELECTRICAL CO LTD) 8. November 2019 (2019-11-08) * Absatz [0016]; Abbildung 1 * ----- | 1-7, 10-16 | ADD. H02K15/06 |
| A | DE 41 24 425 A1 (PAPST MOTOREN GMBH & CO KG [DE]) 30. Januar 1992 (1992-01-30) * Zusammenfassung; Abbildung 1 * ----- | 1-16 | |
| A | CN 106 026 434 A (HUACHEN GROUP AUTO HOLDING CO LTD) 12. Oktober 2016 (2016-10-12) * Zusammenfassung; Abbildung 1 * ----- | 1-16 | |

**RECHERCHIERTE SACHGEBIETE (IPC)**

H02K

Der vorliegende Recherchenbericht wurde für alle Patentansprüche erstellt

| Recherchenort | Abschlußdatum der Recherche | Prüfer |
|---|---|---|
| Den Haag | 27. Januar 2021 | Espinós Iglesias, E |

**KATEGORIE DER GENANNTEN DOKUMENTE**

X : von besonderer Bedeutung allein betrachtet
Y : von besonderer Bedeutung in Verbindung mit einer
anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder
nach dem Anmeldedatum veröffentlicht worden ist
D : in der Anmeldung angeführtes Dokument
L : aus anderen Gründen angeführtes Dokument

........................................................
& : Mitglied der gleichen Patentfamilie, übereinstimmendes
Dokument

EPO FORM 1503 03.82 (P04C03)

**ANHANG ZUM EUROPÄISCHEN RECHERCHENBERICHT
ÜBER DIE EUROPÄISCHE PATENTANMELDUNG NR.**

EP 20 19 2147

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

27-01-2021

| Im Recherchenbericht angeführtes Patentdokument | Datum der Veröffentlichung | Mitglied(er) der Patentfamilie | Datum der Veröffentlichung |
|---|---|---|---|
| US 2019052131 A1 | 14-02-2019 | CN 109391051 A<br>JP 2019033590 A<br>US 2019052131 A1 | 26-02-2019<br>28-02-2019<br>14-02-2019 |
| CN 209608525 U | 08-11-2019 | KEINE | |
| DE 4124425 A1 | 30-01-1992 | KEINE | |
| CN 106026434 A | 12-10-2016 | KEINE | |

EPO FORM P0461

Für nähere Einzelheiten zu diesem Anhang : siehe Amtsblatt des Europäischen Patentamts, Nr.12/82

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- WO 0152386 A2